Europäisches Patentamt

European Patent Office

Office européen des brevets

(11) Publication number: **0 173 446**
**B1**

## (12) EUROPEAN PATENT SPECIFICATION

(45) Date of publication of the patent specification:
**13.09.89**

(51) Int. Cl.⁴: **E04H 12/22**

(21) Application number: **85305207.4**

(22) Date of filing: **23.07.85**

(54) Reinforcement of support elements.

(30) Priority: **24.07.84 GB 8418824**
**24.07.84 GB 8418825**

(43) Date of publication of application:
**05.03.86 Bulletin 86/10**

(45) Publication of the grant of the patent:
**13.09.89 Bulletin 89/37**

(84) Designated Contracting States:
**AT BE CH DE FR GB IT LI LU NL SE**

(56) References cited:
**DE-A- 2 608 010**
**US-A- 3 390 951**
**US-A- 4 306 821**

**PATENTS ABSTRACTS OF JAPAN, vol. 8,
no. 112 (M-298)[1549], 25th May 1984; & JP - A
- 59 21 833 (03-02-1984)**
**PATENTS ABSTRACTS OF JAPAN, vol. 7,
no. 244 (M-252)[1389], 28th October 1983; & JP - A
- 58 131 233 (05-08-1983)**

(73) Proprietor: **MERSEYSIDE AND NORTH WALES
ELECTRICITY BOARD, Sealand Road, Chester,
CH1 4LR(GB)**

(72) Inventor: **Riley, Eric, 2 Meadow Road Middleton,
Manchester M24 1WA(GB)**
Inventor: **Dmochowski, Anthony, 8 Cliff Gardens,
Scunthorpe South Humberside(GB)**

(74) Representative: **Jones, Colin et al, W.P. THOMPSON &
CO. Coopers Building Church Street, Liverpool
L1 3AB(GB)**

ACTORUM AG

## Description

The present invention relates to the reinforcement of support elements, particularly but not exclusively wooden support elements, e.g. poles for supporting electricity or telegraph lines.

Many support elements are simply located in the ground and are of a material which is prone to decay or rotting particularly in that region which extends for a short distance from either side of ground level.

Examples of such support elements are wooden telegraph poles and supports for overhead power lines. This rotting is due particularly to bacterial action in the region of the ground but may be accelerated by other influences, e.g. dog urine. The rotting will eventually reach a stage at which the support element will become unsafe and obviously the pole will require attention before this stage is reached.

One solution is simply to replace the entire pole but this is a comparatively expensive operation which may involve disruption to the general public, e.g. because power lines must be switched off.

A further alternative is to offect reinforcement of the support element in situ and it is with such a method that the present invention is concerned. Two known methods of reinforcing support poles in situ are disclosed in US-A 3 390 951 and US-A 4 306 821.

According to the present invention there is provided a method of reinforcing a support element comprising the steps claimed in claim 1.

Preferably the fabric is a fibre glass cloth and it is to be preferred that the fabric has a predetermined proportion of warp and weft strands to give the desired strength characteristics. A proportion of 60:40 has been found satisfactory. The fabric is preferably of the needle mat type to give sufficient bulk.

In accordance with the invention, applicable particularly to the reinforcement of vertical support poles (e.g. of wood), a fibre glass cloth is provided around the region of the pole to be reinforced and is subsequently surrounded by a resin imprevious sheath which is sealed at the bottom thereof. A curable resin is then introduced into the sheath in the region of the base thereof so that the glass-fibre cloth is impregnated from bottom to top. The resin is then allowed to cure to produce the reinforcement around the pole. The present lies in the step that the resin impervious sheath is sealed at the bottom thereof by forming a trough around the support element and the bottom of the resin impervious sheet and introducing a curable resin therein which enters the space between the lower edge of the sheet and the support element to seal the same. The sheath is spaced sufficiently from the pole by the use of a needle mat cloth and wrapping it several times round the pole.

The invention, as applied to the reinforcement of a wooden support pole (e.g. for telephone or electricity wires), will be described by way of example only hereinafter.

The various aspects of the invention will be further described by way of example only with reference to the accompanying drawings, in which:

Figs. 1 to 7 illustrate successive stages in the reinforcement of a wooden support pole in accordance with the method of the invention, and

Figs. 8 illustrates the completed reinforcement. The drawings illustrate that reinforcement of a wooden support pole 1 over the region most prone to rotting, namely 1m above and below the ground 2.

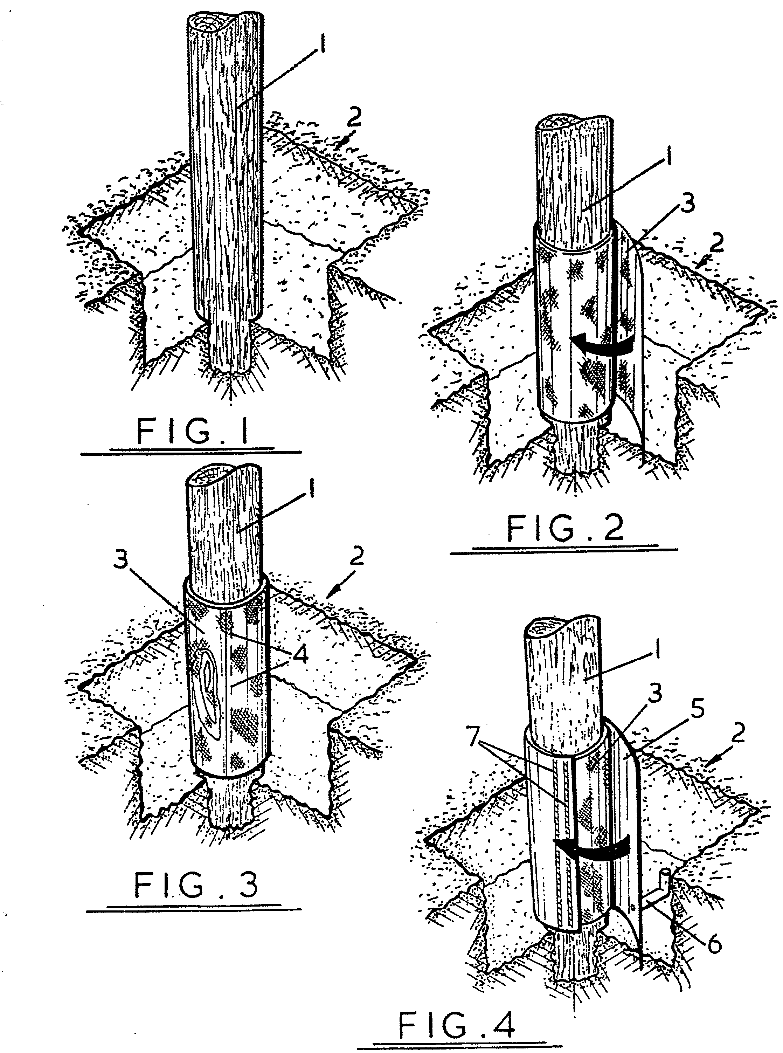

As a first stage in the method (Fig. 1), the ground 2 around the pole 1 is excavated to a depth slightly greater than 1m (i.e. the depth below ground to which the pole 1 is to be reinforced) and the pole 1 cleaned of loose material, soil, etc.

The leading edge of a 2 m wide length of glass fibre fabric 3 (Fig. 2) is then stapled or otherwise affixed to pole 1 and the fabric 3 is wound around the pole 1 such that there is 1m of fabric both above and below ground. A suitable glass-fibre fabric has a weight of 700 $gm^{-2}$ and is available as needle mat type M from G.R.P. Supplies. The number of times the fabric 3 is wound around the pole 1 depends on the fabric used but we have found there turns of the above type M fabric to be adequate. The fabric 3 is finally secured in position on the pole 1 by staples 4 (Fig. 3).

An outer sheath of heavy duty plastics sheet 5 (Fig. 4) having a liquid inlet coupling 6 is next positioned around the glass cloth 3. This sheet 5 has a width of approximately 2.2 m and is located such that the top and bottom edges thereof overlap the glass cloth 3 by approximately 0.1 m with the coupling 6 being in the region of the lower edge of the glass cloth 3.

The sheet 5 may be a polyester sheet such as that available from ICI under the Trade Mark MELINEX. We prefer to use the 250 micron thickness grade of MELINEX. Whatever material is selected for the sheet 5, it must be one which will withstand the exotherm generated during the resin curing stages described below.

As shown in Fig. 4, the widthwise edges of the sheet 5 overlap each other and two parallel sealing strips 7 are provided in the overlap region. The strips 7 may be of KELSEAL 450 available from Evode.

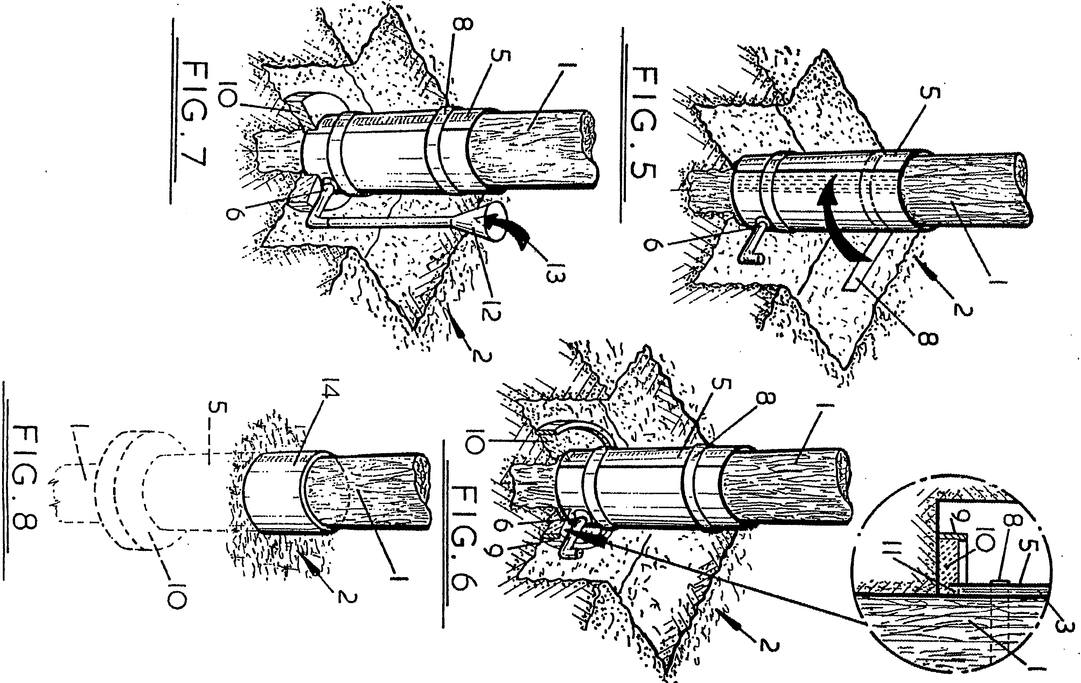

Strips of glass filament tape 8 (Fig. 5) are provided around the plastics sheet 5 to retain it in position.

A strip of plastics material 9 (Fig. 6) is now bent into circular form and pressed into the ground around the base of the pole 1 in the excavated portion of the ground 2. The height of strip 9 above the soil in which it is embedded is such that it extends above the lower edge of plastics sheet 5. A quick setting resin 10 (e.g. having a setting time of two minutes or thirty) is now poured into the trough defined by plastics strip 9 to a level such that the resin 10 enters the space between the lower edge of sheet 5 and the pole 1. The cured resin 10 thus provides a seal 11 at the lower region of sheet 5.

A tube 12 (Fig. 7) is affixed to the coupling 6 so as to extend vertically to a level higher than the top of glass cloth 3. A curable resin 13 is now introduced into tube 12 at the top thereof and thus enters the interior of the sheath formed by sheet 5 towards the base thereof. Consequently, resin 13 begins to fill the sheath and impregnate the glass cloth 3 from bottom to top, thus ensuring that the cloth is fully impregnated. Loss of resin from the bottom of the sheath formed by sheet 5 is prevented by seal 11 whereas strips 7 prevent escape of resin in the overlap region of sheet 5. Sufficient resin 13 is used to ensure that all of glass cloth 3 is impregnated and the resin is then allowed to cure.

Resin 13 is chosen so as to be of low viscosity to ensure full penetration of the resin into the glass cloth 3. The cure time of the resin is selected to give sufficient time to complete the pouring operation without substantial cure of the resin. A cure time of thirty minutes or so is suitable.

A suitable resin 13 is methacrylate resin (e.g. MODAR available from ICI) associated with a benzoyl peroxide catalyst and amine accelerator and formulated to give a cure time of thirty minutes. The resin 13 should include filler powder (e.g. alumina trihydrate) to reduce the exotherm and thereby avoiding possible cracking of the resin. A 60:40 mixture of resin filler will generally be suitable.

Resin 10 may also be comprised of methacrylate/benzoyl peroxide/amine. In this case the resin system should be formulated to give a cure time of two minutes or so. Resin 10 should also include filler to prevent possible damage caused by the exotherm and in this case a resin filler ratio of 1:1 is suitable.

After cure of resin 13, a rigid glass-cloth reinforced resin collar 14 is produced around the pole 1. The top half of sheet 5 (i.e. that portion above ground level) may be cut off to leave the top half of collar 14 exposed. Additionally, the excavated portion of the ground 2 can be refilled with earth.

Using the above-described method, it will be found that the cured resin 13, in addition to providing a reinforcing collar around the pole 1 has also entered the pores, cracks, defects etc. in the pole 1 and prevents further decay therein. Furthermore, the heat generated during curing of the resin 13 is sufficient to kill fungus around the pole, which is, of course, advantageous in preventing further decay of the pole 1.

Although the invention has been specifically described with reference to a vertical wooden pole, it will be appreciated that the inventions as claimed is also applicable to other types of support. Thus, for example, the method of the invention may be used for reinforcing corroded metal support girders of vertical or other orientation.

## Claims

1. A method of reinforcing a generally vertical support element (1) comprising the steps of providing a fabric (3) around the region of the support element to be reinforced, surrounding the fabric with a resin impervious sheath (5) which is sealed at the bottom thereof by forming a trough around the support element (1) and the bottom of the resin impervious sheath (5) and introducing a quick-setting curable resin (10) therein which enters the space between the lower edge of the sheath (5) and the support element (1) to seal the same, and introducing a curable resin (13) into the sheath so that the fabric is impregnated.

2. A method as claimed in claim 1, comprising securing one end of a length of the fabric (3) to the support element and wrapping the fabric thereround and over on itself and securing the other end in position on the support element.

3. A method as claimed in claim 1 or claim 2, in which the resin for impregnating the fabric is introduced at or adjacent the bottom of the sheath so that the fabric is impregnated from the bottom to top.

4. A method as claimed in any preceding claim in which the fabric (3) comprises a glass fibre cloth.

5. A method as claimed in claim 4, in which the cloth is of the needle mat type.

## Patentansprüche

1. Verfahren zur Verstärkung eines im wesentlichen vertikalen Tragelementes (1), wobei ein Gewebe (3) um den zu verstärkenden Bereich angebracht und das Gewebe mit einer harzundurchlässigen Hüllt (5) umgeben wird, welche am Boden derselben durch Anordnung eines Troges , um das Tragelement (1) und der Boden der harzundurchlässigen Hülle (5) abgedichtet wird, wobei ein schnell härtendes Harz (10) in diesen eingebracht wird. welches in den Zwischenraum zwischen dem unteren Ende der Hülle (5) und dem Tragelement (1) zum Abdichten derselben eindringt, und wobei ein härtbares Harz (13) in die Hülle eingebracht wird und das Gewebe imprägniert.

2. Verfahren nach Anspruch 1, wobei ein Ende des Gewebebandes (3) am Tragelement befestigt und das Gewebe darum und um sich selbst herumgewickelt wird, und wobei das andere Ende in seiner Lage am Tragelement festgelegt wird.

3. Verfahren nach Anspruch 1 oder 2, wobei das Harz zur Imprägnierung des Gewebes nahe dem Boden der Hülse eingeführt und so das Gewebe von unten nach oben imprägniert wird.

4. Verfahren nach einem der vorhergehenden Ansprüche, wobei das Gewebe (3) ein Glasfasertuch umfaßt.

5. Verfahren nach Anspruch 4, wobei das Tuch vom Nadelmattentyp ist.

## Revendications

1. Procédé de renforcement d'un élément support (1) généralement vertical comprenant les étapes suivantes:
— on dispose un tissu (3) autour de la région de l'élément support à renforcer,
— on entoure le tissu d'une feuille perméable à la résine (5) qui est rendue étanche à la base de celle-ci en formant une auge autour de l'élément support (1) et de la base de la feuille perméable à la résine (5) et on introduit une résine de polymérisation à durcissement rapide (10) dans celle-ci qui entre par l'espace définit entre le bord inférieur de la feuille (5) et l'élément support (1) pour les rendre étanches, et on introduit une résine de polymérisation (13) à l'intérieur de la feuille de sorte que le tissu soit imprégné.

2. Procédé selon la revendication 1, caractérisé en ce que on fixe une extrémité d'une longueur du tissu (3) à l'élément support et on enveloppe le tissu autour de celui-ci et sur lui-même et on fixe l'autre extrémité en position sur l'élément support.

3. Procédé selon les revendications 1 ou 2, dans lequel la résine pour imprégner le tissu est introduite sur ou de façon adjacente à la base de la feuille de sorte que le tissu soit imprégné du bas jusqu'en haut.

4. Procédé selon l'une quelconque des revendications précédentes dans lequel le tissu (3) comprend un revêtement en fibres de verre.

5. Procédé selon la revendication 4, dans lequel le revêtement est du type matelas à aiguilles.

FIG.1

FIG.2

FIG.3

FIG.4

FIG.5

FIG.6

FIG.7

FIG.8